# FASCICULE DE BREVET EUROPEEN

(11) **EP 1 580 124 B1**
(45) Date de publication et mention de la délivrance du brevet: **20.09.2006**
(21) Numéro de dépôt: 05102433.9
(22) Date de dépôt: 25.03.2005
(51) Int. Cl.: B64D 27/18, B64D 27/26

(54) **Suspension d'un moteur d'avion**
Flugzeugtriebwerksaufhängung
Aircraft engine mount

(30) Priorité: 25.03.2004 FR 0403055
(43) Date de publication de la demande: 28.09.2005
(73) Titulaire: SNECMA, 75015 Paris (FR)
(72) Inventeur: Dron, Sébastien, 92120, Montrouge (FR)
(74) Mandataire: David, Daniel

(56) Documents cités:
- EP-A- 1 216 921
- FR-A- 2 799 432
- US-B1- 6 341 746
- US-B1- 6 347 765

## Description

L'invention concerne la suspension des moteurs d'avion, plus particulièrement des turboréacteurs à double flux. Sur le trajet de l'air qui le traverse, d'amont en aval, un moteur comporte une manche d'entrée, un carter de rétention des aubes de la soufflante, un carter intermédiaire, des moyens de reprise de poussée, un carter d'échappement et une tuyère, ou cône d'échappement.

Un moteur est généralement accroché à l'avion par une suspension avant et une suspension arrière. Mais il peut y avoir plus de deux suspensions. La suspension avant est fixée sur le carter intermédiaire du moteur, la suspension arrière, sur un anneau de suspension relié au carter d'échappement par une série de biellettes et au carter intermédiaire, par des moyens de reprise de poussée inverse, dans le cas d'un accrochage au fuselage arrière.

Quand le moteur est accroché sous l'aile de l'avion, ces moyens de reprise de poussée comprennent une pluralité de bielles. Quand le moteur est accroché au fuselage, généralement à l'arrière, la reprise ou transmission de poussée inverse entre l'inverseur et le carter intermédiaire s'effectue par un carter externe structural appelé « outer fan duct » ou canal de flux froid. L'invention concerne surtout, mais non exclusivement, les moteurs à outer fan duct, d'une part, et la suspension avant de ces moteurs, d'autre part. Elle concerne aussi plus particulièrement la sécurité de rupture (fail safe) de cette suspension, par laquelle un moteur est relié à une poutre elle-même fixée à un élément de l'armature de l'avion, généralement un pylône.

Le carter intermédiaire est fixé à la poutre de la suspension avant en trois endroits, respectivement aux deux extrémités latérales, qui sont généralement les extrémités haute et basse, de la poutre et en partie médiane, par l'intermédiaire de trois éléments de reprise ou transmission des efforts. Les éléments d'extrémité de la poutre sont des biellettes, celui de la partie médiane, une broche, centrale appelée « spigot ».

La suspension avant d'un moteur accroché latéralement à l'arrière du fuselage assure la reprise d'efforts suivant quatre degrés, trois degrés de translation -l'axe vertical Z, latéral Y et suivant l'axe X de poussée- et un degré de rotation autour de l'axe X de poussée.

En cas de rupture d'un des éléments de la suspension, il est souhaitable que le système de sécurité de rupture (fail safe) continue de reprendre les efforts suivant le degré associé à l'élément rompu.

Les moyens de sécurité de rupture sont déjà bien connus.

Le document US 5 474 258 en décrit qui consistent en un doublement de l'équipement normal de reprise des efforts, avec l'inconvénient de la complexité et de la lourdeur du doublement.

Le document FR 2 820 402 propose aussi un doublement de l'équipement normal par un équipement de secours.

Par le document FR 2 799 432, la demanderesse a proposé un système de sécurité plus simple et surtout plus léger. Il s'agit, dans ce document, d'une suspension avant d'un moteur d'avion à carter externe structural (outer fan duct) destiné, par un carter intermédiaire, à être fixé à l'arrière d'un fuselage d'avion, la suspension étant agencée pour être fixée, d'une part par une poutre, au fuselage d'avion et, d'autre part par des éléments de reprise d'efforts latéraux et médian, au carter intermédiaire du moteur, la suspension comprenant un ensemble intégré de reprise d'efforts et de sécurité de rupture agencé pour assurer la continuité de la reprise d'efforts en cas de rupture d'un élément de reprise d'efforts et pour exercer sa fonction de sécurité de façon unitaire et concentrée dans la zone médiane de la suspension.

Grâce à une telle suspension, tous efforts destinés à être repris par un élément quelconque de la suspension, après rupture de cet élément, continuent d'être repris au niveau des moyens unitaires de sécurité de rupture.

Toutefois, il est prévu, dans cet art antérieur, que les efforts, destinés à être repris par les biellettes de reprise latérales, en cas de rupture, le soient par la broche centrale. Il y est encore prévu, dans une autre forme de réalisation, que les efforts des biellettes de reprise, en cas de rupture, soient repris par une collerette de manchon.

La demanderesse a donc cherché, tout en préservant les avantages du caractère unitaire et intégré d'un ensemble de reprise d'efforts et de sécurité de rupture, à en accroître la robustesse, la fiabilité et surtout la visibilité de l'activation lors des visites de contrôle.

L'invention concerne une suspension avant du type défini ci-dessus, caractérisée par le fait que l'ensemble de reprise d'effort et de sécurité de rupture comprend un ensemble d'une chape femelle, à deux oreilles et d'un élément en saillie, traversant avec jeu les deux oreilles de la chape, solidaires, l'un, du carter intermédiaire du moteur, l'autre, de la poutre de suspension.

Mais la demanderesse entend élargir la portée de son brevet à une suspension d'un moteur d'avion agencée pour être fixée, d'une part par une poutre, à l'avion et, d'autre part par des éléments de reprise d'efforts latéraux et médian, au moteur, la suspension comprenant un ensemble intégré de reprise d'efforts et de sécurité de rupture agencé pour assurer la continuité de la reprise d'efforts en cas de rupture d'un élément de reprise d'efforts et pour exercer sa fonction de sécurité de façon unitaire et concentrée dans la zone médiane de la suspension, suspension caractérisée par le fait que l'ensemble de reprise d'effort et de sécurité de rupture comprend un ensemble d'une chape femelle, à deux oreilles, et d'un élément en saillie, traversant avec jeu les deux oreilles de la chape, solidaires, l'un, du moteur, l'autre, de la poutre de suspension.

Ainsi, la présente demande est élargie à toute suspension de moteur, et pas seulement à une suspension avant fixée à un carter intermédiaire, ainsi qu'à tout moteur accroché aussi bien sous une aile qu'au fuselage, et donc pas seulement à un moteur à outer fan duct destiné à être fixé au fuselage.

Avantageusement, celui des deux éléments du moteur, ou plus particulièrement du carter intermédiaire, et de la poutre, duquel l'élément de sécurité en saillie est solidaire, est monté avec jeu entre les deux oreilles de la chape de sécurité.

Ainsi, il existe un jeu entre l'axe de sécurité de rupture et les alésages ménagés dans les oreilles de la chape de sécurité de rupture, d'une part, et entre l'élément de suspension monté entre les deux oreilles de la chape -a priori la poutre- et les oreilles, d'autre part.

En cas de rupture d'un élément de reprise d'efforts latéral, les efforts sont repris grâce à la consommation du jeu entre l'élément en saillie et les alésages dans les oreilles de la chape de sécurité, et ces efforts transitent donc par les oreilles, l'axe et le corps de la poutre, avant d'atteindre le pylône.

En cas de rupture de l'élément de reprise d'efforts médian, les efforts verticaux sont repris comme dans les cas de rupture des éléments d'extrémité latéraux. En ce qui concerne les efforts de poussée, ils sont repris par la consommation du jeu entre la poutre (ou le moteur, ou plus particulièrement le carter intermédiaire si les rôles sont inversés) et les oreilles de la chape et ces efforts transitent donc par les oreilles et le corps de la poutre avant d'atteindre le pylône.

L'invention est remarquable par sa capacité à assurer la fonction de sécurité dans tous les cas de rupture.

Elle sera mieux comprise à l'aide de la description suivante de la forme de réalisation préférée de la suspension, en référence au dessin annexé, sur lequel :

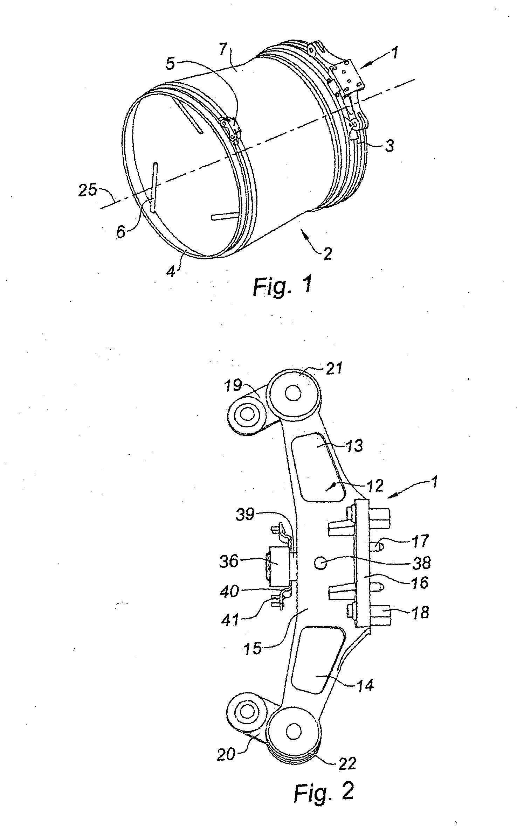

- la figure 1 est une vue en perspective de la suspension et des éléments du moteur, à suspendre au fuselage de l'avion, nécessaires à la suspension ;
- la figure 2 est une vue de face de la poutre de suspension de l'invention, sans moteur ;
- la figure 3 est une vue en perspective de la poutre de suspension et du carter intermédiaire du moteur suspendu à la poutre et
- la figure 4 est une vue en perspective de la chape et de l'axe de sécurité de rupture de la poutre de suspension.

La suspension 1, qui est ici une suspension avant, qui va maintenant être décrite vise à fixer, ici encore à un fuselage d'avion, il s'agira le plus souvent de l'arrière du fuselage, un turboréacteur 2 comprenant notamment un carter intermédiaire 3, sur lequel est donc fixée la suspension avant 1, un anneau de suspension 4, sur lequel est fixée une suspension arrière 5 et qui est relié à un carter d'échappement, non représenté, par une série de biellettes 6. L'anneau de suspension 4 est également relié au carter intermédiaire 3 par un carter externe structural 7 de reprise de poussée inverse appelé « outer fan duct ».

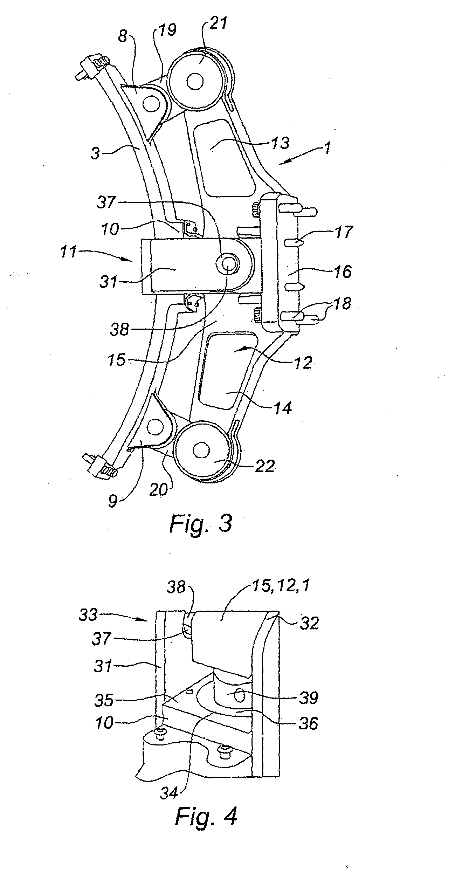

Sur une ferrure en arceau 3 solidaire du carter intermédiaire sont rapportées (figure 3), pour la fixation avant du réacteur, une chape femelle latérale haute 8 et une chape femelle latérale basse 9 ; entre les deux chapes, dans une zone qui peut être qualifiée de médiane, le carter intermédiaire présente en saillie radiale une plate-forme 10 de réception d'un élément de reprise d'efforts et de sécurité de rupture 11 de la suspension 1 qui va être présentée ci-après.

La suspension 1 comporte une poutre 12, en forme générale de trapèze allongé et légèrement curviligne, présentant deux bras 13, 14 s'étendant de part et d'autre d'une portion médiane, ou centrale, 15 se terminant, au niveau de la petite base du trapèze, par une platine 16 en saillie latérale, de fixation à un pylône (non représenté) de la structure du fuselage de l'avion.

La fixation de la poutre de suspension 12 au pylône s'effectue à l'aide de la platine 16 par l'intermédiaire de pions de cisaillement 17 et de vis 18 s'étendant aux quatre coins de la platine orthogonalement à elle.

Les deux extrémités libres 21, 22 des bras 13, 14 de la poutre de suspension sont reliées aux deux chapes 8, 9 du carter intermédiaire 3 (en fait de la ferrure) par deux biellettes 19, 20 de reprise d'efforts montées tourillonnantes dans leur chape de carter ainsi qu'aux extrémités 21, 22 des bras de la poutre agencées aussi en forme de chape.

On va maintenant décrire l'élément médian 11 de reprise d'efforts et de sécurité de rupture.

Deux plaques radiales 31, 32 s'étendent latéralement le long de la plate-forme 10 du carter intermédiaire, sensiblement dans des plans orthogonaux à l'axe de poussée 25, et se prolongent radialement au-delà pour former les deux oreilles d'une chape femelle 33. Un évidemment radial 34 est ménagé dans la plate-forme 10, depuis sa surface externe 35, pour recevoir, par l'intermédiaire d'une rotule 36, une broche ou spigot 39 de reprise d'efforts de la poutre de suspension 1 comme précisé ci-après.

Dans leur portion libre externe, les oreilles de sécurité 31, 32 comportent un alésage traversant 37 de réception d'un axe 38 solidaire de la poutre 12. L'élément 38 n'est pas nécessairement un axe ; il peut s'agir plus généralement d'un élément en saillie.

Le spigot 39, 36 est suspendu à la portion centrale 15 du corps 12 de la poutre, du côté opposé à celui de la platine 16. La rotule 36 est un élément qui est donc reçu dans le logement 34 cylindrique de la chape de sécurité 33 du carter du réacteur, formant boîtier de rotule. Le spigot 39, 36 se solidarise encore à la plate-forme 10 du carter 3 par une plaque 40, montée autour du groin 39, entre la rotule et la poutre. La plaque 40 est vissée sur la plate-forme 10 par quatre vis 41.

La portion centrale 15 du corps de poutre 12 est disposée entre les deux oreilles 31, 32 de la chape 33, l'axe 38, chassé ou monté à travers le corps de poutre, s'étendant à travers les alésages 37 des oreilles avec un jeu de sécurité de rupture. La poutre, de laquelle est solidaire l'axe 38, est fixée en translation entre les faces internes des deux oreilles, avec un jeu de sécurité de part et d'autre, par l'emboîtement de la rotule 36 du spigot dans son logement de réception 34 de la chape 33.

Les trois chapes de suspension 8, 9, 33 qui viennent d'être décrites sont solidaires du carter intermédiaire 3 du réacteur. Naturellement, les dispositions pourraient être inversées, avec des chapes solidaires de la poutre.

La chape 33, le spigot 39, 36 et l'axe 38 forment un ensemble 11 de reprise d'efforts et de sécurité de rupture qui a la particularité avantageuse d'être unitaire et concentré dans la zone médiane de la poutre de suspension 1.

En cas de rupture d'une des biellettes 19, 20 le carter intermédiaire 3 bascule très légèrement jusqu'à ce que soit consommé le jeu entre l'axe 38 et les alésages 37 des oreilles 31, 32, les efforts transitant donc par ces oreilles 31, 32, l'axe 38 et le corps de poutre 12, avant d'atteindre le pylône à travers la platine 16, les vis 18 et les pions 17.

En cas de rupture du spigot 36, 39, la poussée est reprise par la consommation du jeu entre le corps de poutre 12 et l'une ou l'autre des deux oreilles 31, 32, les efforts transitant par les oreilles 31, 32, l'axe 38, la platine 16, les vis 18 et les pions de cisaillement 17 avant d'atteindre le pylône.

## Revendications

1. Suspension (1) d'un moteur d'avion (2) comprenant une poutre (12) apte à être fixée à l'avion, des éléments de reprise d'efforts latéraux (19, 20) et médian (36) apte à être fixés au moteur (2, 3), et un ensemble intégré de reprise d'efforts et de sécurité de rupture (11) agencé pour assurer la continuité de la reprise d'efforts en cas de rupture d'un élément de reprise d'efforts et pour exercer sa fonction de sécurité de façon unitaire et concentrée dans la zone médiane (15) de la suspension, suspension **caractérisée par le fait que** l'ensemble de reprise d'effort et de sécurité de rupture (11) comprend un ensemble d'une chape femelle (33), à deux oreilles (31, 32), et d'un élément en saillie (38), traversant avec jeu (37) les deux oreilles (31, 32) de la chape (33), solidaires, l'un (33), du moteur (2, 3), l'autre (38), de la poutre de suspension (12).

2. Suspension selon la revendication 1, dans laquelle celui des deux éléments du moteur (2, 3) et de la poutre (12), duquel l'élément de sécurité en saillie (38) est solidaire, est monté avec jeu entre les deux oreilles (31, 32) de la chape de sécurité (33).

3. Suspension selon la revendication 2, dans laquelle l'élément de sécurité de rupture (38) en saillie est monté à travers le corps de poutre (12) qui est disposé entre les deux oreilles (31, 32) de la chape (33).

4. Suspension selon l'une des revendications 1 à 3, dans laquelle la chape de sécurité de rupture (33) comporte, entre ses deux oreilles (31, 32), un logement radial (34) de réception de l'élément de reprise d'efforts médian (36, 39) de la poutre (12).

5. Suspension selon l'une des revendications 1 à 4, dans laquelle, en cas de rupture d'un élément de reprise d'efforts latéral (19, 20), les efforts sont repris grâce à la consommation du jeu (37) entre l'élément en saillie (38) et les alésages (37) dans les oreilles (31, 32) de la chape de sécurité (33), et ces efforts transitent donc par les oreilles (31, 32), l'élément en saillie (38) et le corps de la poutre (12).

6. Suspension selon l'une des revendications 1 à 5, dans laquelle, en cas de rupture de l'élément de reprise d'efforts médian (39), les efforts verticaux sont repris grâce à la consommation du jeu (37) entre l'élément en saillie (38) et les alésages (37) dans les oreilles (31, 32) de la chape de sécurité (33) et ces efforts transitent donc par les oreilles (31, 32), l'élément en saillie (38) et le corps de la poutre (12).

7. Suspension selon l'une des revendications 2 à 6, dans laquelle, en cas de rupture de l'élément de reprise d'efforts médian (36), les efforts de poussée sont repris par la consommation du jeu entre celui des deux éléments du moteur (2, 3) et de la poutre (12), duquel l'élément de sécurité en saillie (38) est solidaire, et les oreilles (31, 32) de la chape de sécurité (33) et ces efforts transitent donc par les oreilles (31, 32) et le corps de la poutre (12).

8. Suspension selon l'une des revendications 1 à 7, qui est une suspension avant fixée à un carter intermédiaire (3) du moteur (2).

9. Suspension selon l'une des revendications 1 à 8, qui est une suspension d'un moteur (2), à carter externe structural - ou "outer fan duct "- (7), destiné à être fixé à un fuselage d'avion.

## Claims

1. A mount (1) for an aircraft engine (2) arranged to be attached firstly by a beam (12) to the aircraft, and secondly by lateral (19, 20) and a median (36) load transmission elements to the engine (2, 3), the mount comprising an integrated load transmission and failsafe assembly (11) arranged to ensure the continuity of load transmission in the event of failure of a load transmission element and to perform its failsafe function in unitary, concentrated manner in the median zone (15) of the mount, **characterized by** the fact that the load transmission and failsafe assembly (11) comprises a female clevis (33) with two wings (31, 32) and a projecting element (38) passing with clearance (37) through the two wings (31, 32) of clevis (33), one (33) being integral with the engine (2, 3) and the other (38) with the mounting beam (12).

2. Mount as in claim 1, wherein the element either of the engine (2, 3) or of beam (12) with which the projecting failsafe element (38) is made integral, is mounted with clearance between the two wings (31, 32) of the failsafe clevis (33).

3. Mount as in claim 2, wherein the projecting failsafe element (38) is mounted through the beam body (12) which is arranged between the two wings (31, 32) of clevis (33).

4. Mount as in any of claims 1 to 3, wherein the failsafe clevis (33) between its two wings (31, 32) comprises a radial housing (34) to receive the median load transmission element (36, 39) of the beam (12).

5. Mount as in any of claims 1 to 4, wherein in the event of failure of a lateral load transmission element (19, 20) the loads are transmitted by using the clearance (37) between the projecting element (38) and the bores (37) in the two wings (31, 32) of the failsafe clevis (33), and these loads therefore transit via the wings (31, 32), the projecting element (38) and the beam body (12).

6. Mount as in any of claims 1 to 5, wherein in the event of failure of the median load transmission element (39) the vertical loads are transmitted by taking up the clearance (37) between the projecting element (38) and the bores (37) in wings (31, 32) of the failsafe clevis (33), and these loads therefore transit via the two wings (31, 32) the projecting element (38) and the beam body (12).

7. Mount as in any of claims 2 to 6, wherein in the event of failure of the median load transmission element (36) the thrust loads are transmitted by taking up the clearance between either the engine (2, 3) or the beam (12), according to whichever of the two the projecting failsafe element (38) is made integral, and the wings (31, 32) of the failsafe clevis (33), and these loads therefore transit via the clevis wings (31, 32) and the beam body (12).

8. Mount as in any of claims 1 to 7 which is a forward mount attached to an intermediate case (3) of the engine (2).

9. Mount as in any of claims 1 to 8 which is a mount for an engine (2) with outer fan duct (7) intended to be attached to an aircraft fuselage.

## Patentansprüche

1. Aufhängung (1) eines Flugzeugmotors (2) mit einem Träger (12), der am Flugzeug befestigt werden kann, mit seitlichen (19, 20) und einem mittleren Kraftübernahmeelementen (36), die am Motor (2, 3) befestigt werden können, und mit einer integrierten Kraftübernahme- und Bruchsicherheitseinheit (11), die ausgelegt ist, um die Kontinuität der Kraftübernahme im Fall des Bruchs eines Kraftübernahmeelements zu gewährleisten und um ihre Sicherheitsfunktion einheitlich und konzentriert in der Mittelzone (15) der Aufhängung auszuüben, wobei die Aufhängung **dadurch gekennzeichnet ist, dass** die Kraftübernahme- und Bruchsicherheitseinheit (11) eine Einheit aus einem Gabelkopf (33) mit zwei Ansätzen (31, 32) und einem vorstehenden Element (38) aufweist, das die beiden Ansätze (31, 32) des Gabelkopfs (33) mit Spiel (37) durchquert, wobei der Gabelkopf (33) mit dem Motor (2, 3) und das Element (38) mit dem Aufhängungsträger (12) fest verbunden ist.

2. Aufhängung nach Anspruch 1, bei der dasjenige der beiden Elemente des Motors (2, 3) und des Trägers (12), mit dem das vorstehende Sicherheitselement (38) fest verbunden ist, mit Spiel zwischen den beiden Ansätzen (31, 32) des Sicherheits-Gabelkopfs (33) montiert ist.

3. Aufhängung nach Anspruch 2, bei der das vorstehende Bruchsicherheitselement (38) durch den Trägerkörper (12) hindurch montiert ist, der zwischen den beiden Ansätzen (31, 32) des Gabelkopfs (33) angeordnet ist.

4. Aufhängung nach einem der Ansprüche 1 bis 3, bei der der Bruchsicherheits-Gabelkopf (33) zwischen seinen beiden Ansätzen (31, 32) einen radialen Sitz (34) zur Aufnahme des mittleren Kraftübernahmeelements (36, 39) des Trägers (12) aufweist.

5. Aufhängung nach einem der Ansprüche 1 bis 4, bei der im Fall des Bruchs eines seitlichen Kraftübernahmeelements (19, 20) die Kräfte durch den Verbrauch des Spiels (37) zwischen dem vorstehenden Element (38) und den Bohrungen (37) in den Ansätzen (31, 32) des Sicherheits-Gabelkopfs (33) übernommen werden, und diese Kräfte also durch die Ansätze (31, 32), das vorstehende Element (38) und den Körper des Trägers (12) gehen.

6. Aufhängung nach einem der Ansprüche 1 bis 5, bei der im Fall des Bruchs des mittleren Kraftübernahmeelements (39) die senkrechten Kräfte durch den Verbrauch des Spiels (37) zwischen dem vorstehenden Element (38) und den Bohrungen (37) in den Ansätzen (31, 32) des Sicherheits-Gabelkopfs (33) übernommen werden, und diese Kräfte also durch die Ansätze (31, 32), das vorstehende Element (38) und den Körper des Trägers (12) gehen.

7. Aufhängung nach einem der Ansprüche 2 bis 6, bei der im Fall eines Bruchs des mittleren Kraftübernahmeelements (36) die Schubkräfte durch den Verbrauch des Spiels zwischen demjenigen der beiden Elemente des Motors (2, 3) und des Trägers (12), mit dem das vorstehende Sicherheitselement (38) fest verbunden ist, und den Ansätzen (31, 32) des Sicherheits-Gabelkopfs (33) übernommen werden, und diese Kräfte also durch die Ansätze (31, 32) und den Körper des Trägers (12) gehen.

8. Aufhängung nach einem der Ansprüche 1 bis 7, die eine vordere Aufhängung ist, die an einem Zwischengehäuse (3) des Motors (2) befestigt ist.

9. Aufhängung nach einem der Ansprüche 1 bis 8, die eine Aufhängung eines Motors (2) mit äußerem strukturalem Gehäuse - oder "outer fan duct" - (7) ist, das dazu bestimmt ist, an einem Flugzeugrumpf befestigt zu werden.
